(19) Europäisches Patentamt
European Patent Office
Office européen des brevets

(11) **EP 2 909 660 B1**

(12) **EUROPÄISCHE PATENTSCHRIFT**

(45) Veröffentlichungstag und Bekanntmachung des Hinweises auf die Patenterteilung:
**09.04.2025 Patentblatt 2025/15**

(21) Anmeldenummer: **13782657.4**

(22) Anmeldetag: **14.10.2013**

(51) Internationale Patentklassifikation (IPC):
*G02B 5/09* (2006.01)     *G02B 5/18* (2006.01)
*G02B 5/32* (2006.01)     *B44F 7/00* (2006.01)
*G03H 1/00* (2006.01)     *G03H 1/02* (2006.01)
*G07D 7/00* (2016.01)     *G07D 7/207* (2016.01)
*B42D 25/29* (2014.01)     *B42D 25/328* (2014.01)

(52) Gemeinsame Patentklassifikation (CPC):
**B42D 25/328; B42D 25/29; B44F 7/00; G02B 5/09; G02B 5/1842; G02B 5/1861; G02B 5/32; G03H 1/0011; G07D 7/003; G07D 7/207; G03H 1/0248**

(86) Internationale Anmeldenummer:
**PCT/EP2013/003088**

(87) Internationale Veröffentlichungsnummer:
**WO 2014/060089 (24.04.2014 Gazette 2014/17)**

(54) **OPTISCH VARIABLES FLÄCHENMUSTER**

OPTICALLY VARIABLE SURFACE PATTERN

MOTIF SURFACIQUE OPTIQUEMENT VARIABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.10.2012 DE 102012020257**

(43) Veröffentlichungstag der Anmeldung:
**26.08.2015 Patentblatt 2015/35**

(60) Teilanmeldung:
**25160309.8**

(73) Patentinhaber: **Giesecke+Devrient Currency Technology GmbH**
**81677 München (DE)**

(72) Erfinder: **FUHSE, Christian**
**83624 Otterfing (DE)**

(74) Vertreter: **Giesecke+Devrient IP**
**Prinzregentenstraße 161**
**81677 München (DE)**

(56) Entgegenhaltungen:
**EP-A2- 0 919 961          WO-A2-2011/066990**
**DE-A1- 102010 025 775     DE-A1- 102010 048 262**
**JP-A- 2002 131 697        JP-A- 2008 292 665**

**Beschreibung**

Die Erfindung betrifft ein optisch variables Flächenmuster, das z.B. bei zu schützenden Gegenständen vorgesehen werden kann, so dass das optisch variable Flächenmuster die Überprüfung der Echtheit des Gegenstandes erlaubt und/ oder als Schutz vor unerlaubter Reproduktion oder Imitation dient.

Es sind optisch variable Flächenmuster bekannt, die einem Betrachter mittels mikroskopisch kleiner Prägestrukturen den Eindruck einer makroskopisch gewölbten Fläche vortäuschen. Ein einfaches Beispiel ist eine metallisierte Fresnellinse, die ein Betrachter wie eine Kugeloberfläche wahrnehmen kann. Weitergehende Beispiele komplexerer Motive sind z.B. in der EP 1 562 758 B1 beschrieben.

Aus der WO 2011/066990 A2 ist es bekannt, eine Wölbung mit einer Vielzahl kleiner reflektierender Facetten nachzustellen. Solche Flächenmuster eignen sich gut als Sicherheitselemente, da der optische Effekt einfach zu verstehen und auch bei schlechten Lichtverhältnissen gut sichtbar ist und da eine Nachstellung mit drucktechnischen Mitteln nicht möglich ist.

Auch die Druckschrift DE 10 2010 025 775 A1 befasst sich mit einem Sicherheitselement mit einem Träger, der einen Motivbereich aufweist, der eine mikrooptische Darstellungsanordnung umfasst, die als einen Motivteil eine reflektive Oberfläche darbietet, die gegenüber der tatsächlichen makroskopischen Raumform der zweiten mikrooptischen Darstellungsanordnung gewölbt erscheint.

Aus der Druckschrift DE 10 2010 048 262 A1 ist ferner ein Darstellungselement mit einem Substrat mit einem Flächenbereich bekannt, in dem eine Mehrzahl optischer Elemente angeordnet ist. Das Darstellungselement ist dabei ausgelegt und bestimmt, bei Beleuchtung ein Lichtfleckenbild aus einer Mehrzahl von Lichtflecken zu erzeugen, die für einen Betrachter oberhalb oder unterhalb des Flächenbereichs schwebend erscheinen und die in Form eines vorbestimmten Motivs angeordnet sind.

Aufgrund der hohen Attraktivität der optischen Effekte werden diese nicht nur innerhalb des Banknotenbereichs, sondern z.B. auch immer mehr in der Verpackungsindustrie genutzt. Dadurch schwindet die besondere Stellung solcher Effekte als Sicherheitsmerkmal und die Gefahr durch Nachstellungen oder Imitationen steigt.

Ausgehend hiervon ist es Aufgabe der Erfindung, ein optisch variables Flächenmuster bereitzustellen, das sich von bekannten optisch variablen Flächenmustern deutlich sichtbar abgrenzt, um so auch in Zukunft einen hohen Schutz vor Nachstellungen oder Imitationen zu garantieren, wobei der durch das optisch variable Flächenmuster bereitgestellte Effekt so sein soll, dass er von einem Betrachter zur Echtheitsprüfung leicht erkannt und verifiziert werden kann.

Die Aufgabe wird durch ein optisch variables Flächenmuster gelöst, das einen Träger mit einem ersten und einem zweiten Flächenbereich aufweist, wobei die beiden Flächenbereiche so ausgebildet sind, dass der erste Flächenbereich in einem ersten Raumwinkelbereich eine gewölbt erscheinende erste Ansicht und der zweite Flächenbereich in einem zweiten Raumwinkelbereich, der verschieden zum ersten Raumwinkelbereich ist, eine gewölbt erscheinende zweite Ansicht darbietet, wobei zumindest einer der beiden Flächenbereiche die gewölbt erscheinende Ansicht durch Imitation das Reflexionsverhalten einer gewölbten Oberfläche darbietet, und wobei die Imitation des Reflexionsverhaltens der gewölbten Oberfläche durch optisch wirksame Reliefstrukturen bewirkt ist, wobei die Flächenbereiche ineinander verschachtelt sind.

Dadurch kann ein Betrachter durch Kippen des optisch variablen Flächenmusters zuerst die erste Ansicht und danach die zweite Ansicht wahrnehmen. Selbst wenn sich die beiden Raumwinkelbereiche teilweise überlappen, liegen beim Kippen Betrachtungssituationen vor, in denen entweder nur die erste Ansicht oder nur die zweite Ansicht wahrnehmbar ist. Dieser Effekt ist für einen Betrachter leicht zu verstehen und zu überprüfen.

Insbesondere ist zumindest einer der Flächenbereiche als reflektiver Flächenbereich ausgebildet. Dadurch kann dem Betrachter ein Reflexionsverhalten dargeboten werden, das dem Reflexionsverhalten einer tatsächlich gewölbten reflektierenden Oberfläche entspricht, was überraschend und sehr einprägsam ist.

Die Raumwinkelbereiche können gleich groß sein. Es ist jedoch auch möglich, dass sie unterschiedlich groß sind.

Die optisch wirksamen Reliefstrukturen können in einer Lackschicht ausgebildet sein. Insbesondere können sie in einen Prägelack abgeformt sein.

Die optisch wirksamen Reliefstrukturen können mit einer reflektierenden oder zumindest reflexionserhöhenden Beschichtung versehen sein. Insbesondere kann eine metallische oder hochbrechende Beschichtung vorgesehen sein.

Eine reflexionserhöhende Beschichtung im Sinne der vorliegenden Erfindung ist insbesondere eine Beschichtung, die den Reflexionsgrad beispielsweise von etwa 20% auf etwa 50% erhöht, wie z.B. semitransparente Schichten. Die reflexionserhöhende Beschichtung kann eine metallische Beschichtung sein, die beispielsweise aufgedampft ist. Als Beschichtungsmaterial kann insbesondere Aluminium, Gold, Silber, Kupfer, Palladium, Chrom, Nickel und/ oder Wolfram sowie deren Legierungen verwendet werden.

Bei dem erfindungsgemäßen optisch variablen Flächenmuster können die optisch wirksamen Reliefstrukturen Mikrospiegel aufweisen. Die Mikrospiegel sind bevorzugt im Wesentlichen strahlenoptisch wirksam und können regelmäßig und/ oder unregelmäßig angeordnet sein.

Die Mikrospiegel können Abmessungen zwi-

schen 2 μm und 300 μm, bevorzugt zwischen 3 μm und 100 μm und besonders bevorzugt zwischen 6 μm und 20 μm aufweisen.

Ferner können die Reliefstrukturen beugungsoptisch wirkende Beugungsstrukturen aufweisen. Diese Beugungsstrukturen können insbesondere im Wesentlichen beugungsoptisch wirksam sein. Ferner können die Beugungsstrukturen symmetrisch oder bevorzugt asymmetrisch ausgebildet sein.

Bei dem erfindungsgemäßen optisch variablen Flächenmuster können die Reliefstrukturen für jede Ansicht jeweils lokale Steigungsänderungen der entsprechenden darzubietenden Ansicht nachstellen. Die nachgestellten lokalen Steigungsänderungen weisen dabei bevorzugt Steigungswerte auf, die sich von den entsprechenden lokalen Steigungswerten der nachgestellten gewölbten Ansicht unterscheiden.

Insbesondere können die durch die Reliefstrukturen nachgestellten lokalen Steigungsänderungen so gewählt sein, dass einfallendes paralleles Licht in den entsprechenden Raumwinkelbereich (beispielsweise erster oder zweiter Raumwinkelbereich) reflektiert wird. Da die menschliche Wahrnehmung offenbar darauf abgestimmt ist, Steigungsänderungen entsprechend einer Krümmung bzw. Wölbung zu erkennen, während die absolute Steigung nur schwer erkannt wird, sind für einen Betrachter in den unterschiedlichen Raumwinkelbereichen die gewölbt erscheinenden Ansichten als solche wahrnehmbar.

Man kann auch sagen, dass mit den Reliefstrukturen eine Höhenfunktion der entsprechenden gewölbten Ansicht nachgestellt wird. Zur Charakterisierung der gewölbten Ansicht ist die Höhenfunktion üblicherweise von zwei Ortskoordinaten in einer Ebene abhängig. Abhängig von der Höhenfunktion kann eine lokale Steigung ermittelt werden. Die lokale Steigung wird dann für die unterschiedlichen Ansichten so geändert, dass die Darbietung in den unterschiedlichen Raumwinkelbereichen erfolgt. Dabei kann die Änderung der Steigung in Abhängigkeit von beiden Ortskoordinaten durchgeführt werden. Es ist jedoch auch möglich, die Änderung der Steigung nur bezüglich einer Ortskoordinate durchzuführen und bezüglich der anderen Ortskoordinate die Steigung unverändert zu belassen.

Natürlich ist es auch möglich, die Änderung der Steigung für beide Ortskoordinaten unterschiedlich zu wählen.

Die Flächenbereiche sind bei dem optisch variablen Flächenmuster ineinander verschachtelt. Insbesondere kann das optisch variable Flächenmuster mehr als zwei verschiedene Flächenbereiche aufweisen. So kann es drei, vier oder auch mehr verschiedene Flächenbereiche aufweisen, die jeweils unterschiedlich gewölbt erscheinende Ansichten in sich unterscheidende Raumwinkelbereiche darbieten.

Insbesondere können sich die beiden Raumwinkelbereiche beim Vorsehen von zwei Flächenmustern oder auch mehrerer Raumwinkelbereiche bei dem Vorsehen von mehreren Flächenmustern nicht überlappen.

Bei dem optisch variablen Flächenmuster können bzw. kann der erste und/oder zweite Flächenbereich einfallendes paralleles Licht in einen Winkelbereich von mindestens 10°, bevorzugt mindestens 20° und besonders bevorzugt mindestens 30° reflektieren. Damit wird erreicht, dass die zugehörige Ansicht aus einem entsprechenden großen Betrachtungswinkelbereich mit gut erkennbarer Wölbung sichtbar wird.

Es wird ferner ein Sicherheitselement und/oder ein Wertdokument mit einem erfindungsgemäßen optisch variablen Flächenmuster (einschließlich seiner Weiterbildungen) bereitgestellt.

Des Weiteren wird ein Verfahren zur Erzeugung eines erfindungsgemäßen optisch variablen Flächenmusters (einschließlich seiner Weiterbildungen) bereitgestellt, bei dem die Steigungsverläufe der darzubietenden gewölbten Ansichten ermittelt werden, der Steigungsverlauf der ersten Ansicht sowie der Steigungsverlauf der zweiten Ansicht über unterschiedliche Transformationen geändert werden und der Träger mit den beiden Flächenbereichen basierend auf den geänderten Steigungsverläufen hergestellt wird.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielshalber anhand der beigefügten Figuren, die auch erfindungswesentliche Merkmale offenbaren, noch näher erläutert. Zur besseren Anschaulichkeit wird in den Figuren teilweise auf eine maßstabs- und proportionsgetreue Darstellung verzichtet. Es zeigen:

Figur 1    eine Draufsicht einer Banknote 11 mit einem erfindungsgemäßen optisch variablen Flächenmuster 10;

Figur 2    eine Schnittdarstellung zur Erläuterung der zwei in unterschiedlichen Raumwinkelbereichen dargebotenen Ansichten;

Figur 3    eine Schnittansicht des optisch variablen Flächenmusters 10 mit Mikrospiegeln 16,17 zur Erzeugung der Ansichten gemäß Figur 2;

Figur 4    eine Schnittdarstellung eines nachzustellenden Oberflächenprofils;

Figur 5    eine Schnittansicht einer entsprechenden Anordnung der Mikrospiegel 16 zur Nachstellung des Oberflächenprofils gemäß Figur 4;

Figur 6     eine Schnittdarstellung eines nachzustellenden Oberflächenprofils;

Figur 7     eine Schnittansicht einer entsprechenden Anordnung der Mikrospiegel 17 zur Nachstellung des Oberflächenprofils gemäß Figur 6;

Figur 8     eine Darstellung von Schnittansichten zur Erläuterung der Ineinanderschachtelung der Mikrospiegelanordnungen von Figuren 5 und 7;

Figur 9     eine vergrößerte Schnittansicht eines Teils der Mikrospiegelanordnung gemäß Figur 5;

Figur 10    eine vergrößerte Schnittansicht eines Teils der Mikrospiegelanordnung gemäß Figur 7;

Figur 11    eine Schnittansicht der erfindungsgemäß angepassten Mikrospiegelanordnung von Figur 9;

Figur 12    eine Schnittansicht der erfindungsgemäß angepassten Mikrospiegelanordnung von Figur 10;

Figur 13    ein Höhenprofil entsprechend Figur 9;

Figur 14    ein Höhenprofil entsprechend Figur 13;

Figur 15    die erfindungsgemäß bewirkte Änderung des Höhenprofils für die Mikrospiegel des ersten Flächenbereiches;

Figur 16    die erfindungsgemäß bewirkte Änderung des Höhenprofils für die Mikrospiegel des zweiten Flächenbereiches;

Figur 17    eine Darstellung von Schnittansichten zur Erläuterung der erfindungsgemäßen Strukturierung ausgehend von den geänderten Strukturierungen 22 und 23;

Figur 18    eine schematische Draufsicht des optisch variablen Flächenmusters 10 zur Erläuterung einer Möglichkeit der Verschachtelung der beiden Flächenbereiche 24 und 25, und

Figur 19    eine weitere schematische Draufsicht des optisch variablen Flächenmusters 10 zur Erläuterung einer weiteren Variante der Verschachtelung der beiden Flächenbereiche 24 und 25.

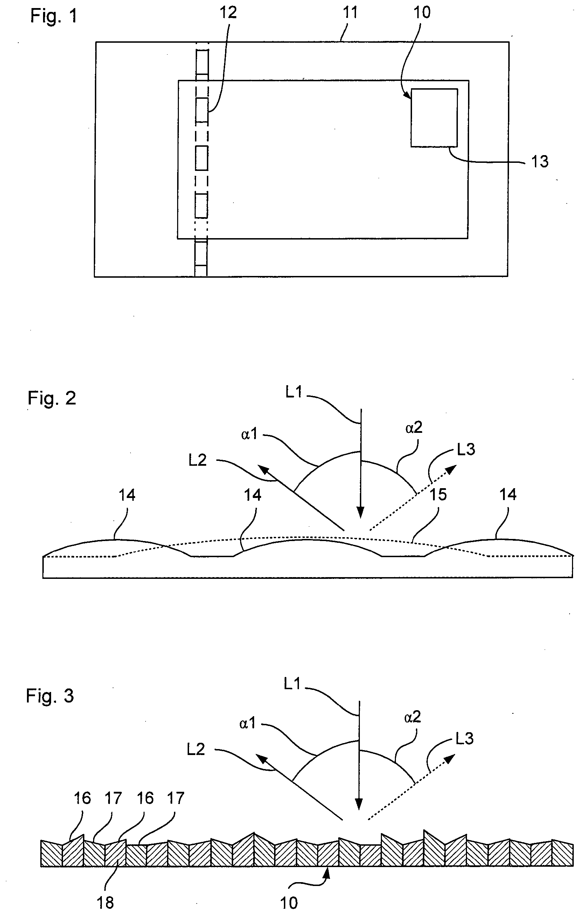

Bei der in Fig. 1 gezeigten Ausführungsform ist das erfindungsgemäße optisch variable Flächenmuster 10 als Sicherheitselement so in einer Banknote 11 integriert, dass es in der in Fig. 1 gezeigten Vorderseite der Banknote 11 sichtbar ist. Alternativ kann das erfindungsgemäße optisch variable Flächenmuster 10 z.B. als Fensterfaden 12 vorliegen.

Das optisch variable Flächenmuster 10, das auch als optisch variables Element 10 bezeichnet werden kann, ist als reflektives Element 10 ausgebildet, das einem Benutzer in zwei unterschiedlichen Raumwinkelbereichen $\alpha 1$, $\alpha 2$ zwei gewölbt erscheinende Ansichten darbietet, wie in der Schnittdarstellung von Fig. 2 angedeutet ist. So wird das einfallende Licht L1 einerseits in den ersten Raumwinkelbereich $\alpha 1$ reflektiert, der sich in der Zeichenebene vom Pfeil L1 bis zum Pfeil L2 erstreckt. Andererseits wird das einfallende Licht L1 in den zweiten Raumwinkelbereich $\alpha 2$ reflektiert, der sich in der Zeichenebene vom Pfeil L1 bis zum Pfeil L3 erstreckt. In dem ersten Raumwinkelbereich $\alpha 1$ werden drei kleine gewölbt erscheinende Erhebungen 14 dargeboten, wie mit der durchgezogenen Linie in Fig. 2 angedeutet ist. Im zweiten Raumwinkelbereich $\alpha 2$ wird nur eine einzelne größere Erhebung 15 dargestellt, wie gestrichelt angedeutet ist.

Die gewölbt erscheinenden Ansichten (die drei Erhebungen 14 bzw. die eine Erhebung 15) werden dadurch realisiert, dass das Reflexionsverhalten derart gewölbter Flächen imitiert wird. Diese Imitation kann z.B. dadurch erreicht werden, dass zur Erzeugung der ersten Ansicht der drei kleinen Erhebungen 14 Mikrospiegel 16 und zur Erzeugung der zweiten Ansicht der großen Erhebungen 15 Mikrospiegel 17 vorgesehen werden, die jeweils die entsprechende lokale Steigung aufweisen, um die gewünschte gewölbt erscheinende Ansicht zu erzeugen, wie in der schematischen Schnittansicht in Fig. 3 gezeigt ist. Die Mikrospiegel 16, 17 sind hier abwechselnd angeordnet und können z.B. durch eine strukturierte Lackschicht 18, deren strukturierte Oberseite verspiegelt ist, gebildet sein.

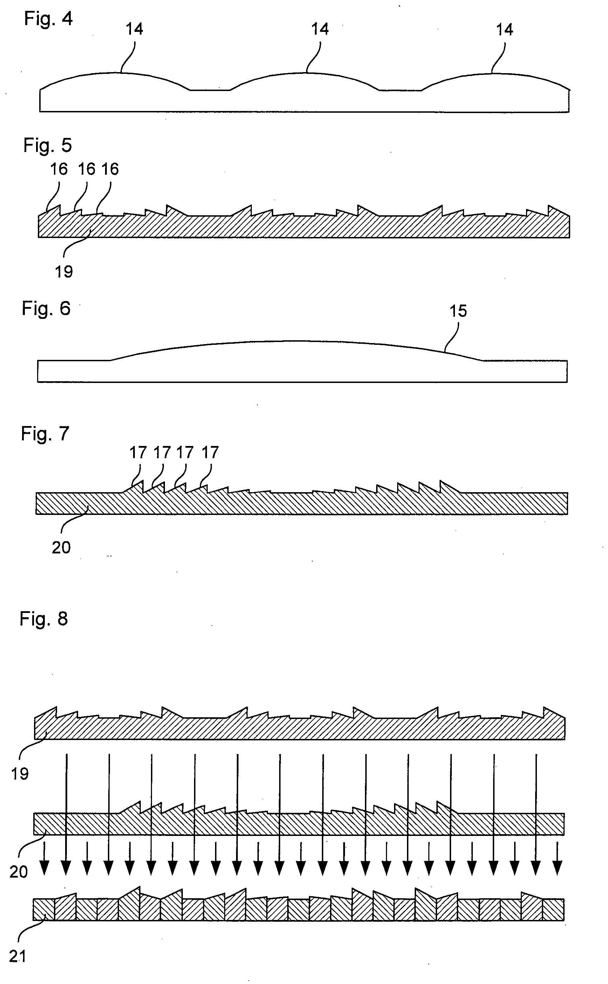

Die Erzeugung der gewölbt erscheinenden Ansicht der drei Erhebungen 14 wird unter Bezug auf Fig. 4 und 5 näher erläutert, wobei Fig. 4 das nachzustellende Oberflächenprofil und Fig. 5 die entsprechende Anordnung der Mikrospiegel 16 zeigt. Um den gewünschten Effekt zu erreichen, dass die Lichtreflexe beispielsweise beim Kippen des Flächenmusters 10 wie auf einem metallischen Relief umherwandern, wird die lokale Steigung der Erhebungen 14 durch die Neigung der Mikrospiegel 16 nachgestellt. Wenn die Abmessung der Mikrospiegel 16 ausreichend klein ist (beispielsweise kleiner als 100 $\mu$m), werden sie vom unbewaffneten menschlichen Auge nicht mehr getrennt aufgelöst und die Gesamtheit der Mikrospiegel 16 erscheint einem Betrachter als eine zusammenhängende Fläche. Bei der in Fig. 5 gezeigten ersten Strukturierung 19 mit den Mikrospiegeln 16 würden dem Betrachter daher die drei Erhebungen 14 dargeboten werden, die gegenüber der tatsächlichen makroskopischen Raumform der ersten Strukturierung 19 als vorstehende, reflektierende Fläche wahrnehmbar sind.

In gleicher Weise kann mittels einer zweiten Strukturierung 20 und den entsprechend angeordneten Mikrospiegeln 17, wie in Fig. 7 gezeigt ist, die große Erhebung 15 gemäß Fig. 6 nachgebildet werden.

Ausgehend von der ersten und zweiten Strukturierung 19 und 20 kann dann eine dritte Strukturierung 21 realisiert werden, bei der die Mikrospiegel 16 und 17 abwechselnd angeordnet werden, wie durch die Pfeile in Fig. 8 angedeutet ist. Die dritte Strukturierung 21 könnte dann in einer Lackschicht ausgebildet sein. Dies würde jedoch dazu führen, dass die drei kleinen Erhebungen 14 und die große Erhebung 15 für einen Betrachter unter derselben Blickrichtung gleichzeitig wahrnehmbar sind, so dass ein semitransparenter Eindruck vorliegt. Für einen Betrachter würde dann nicht ein metallischer Eindruck vorliegen, sondern z.B. ein Eindruck, als ob die Erhebungen aus Glas bestünden. Die Erhebungen 14 und 15 erscheinen einem Betrachter somit aus praktisch allen Betrachtungsrichtungen gleichzeitig und das gesamte optisch variable Flächenmuster erscheint somit zwar gewölbt, aber auch statisch und unveränderlich.

Erfindungsgemäß wird daher die Steigung der Mikrospiegel 16 und 17 in der verschachtelten Strukturierung 21 so verändert, dass einfallendes Licht L1 von zu unterschiedlichen Ansichten gehörenden Mikrospiegeln 16, 17 in unterschiedliche Raumwinkelbereiche $\alpha$1, $\alpha$2 reflektiert wird.

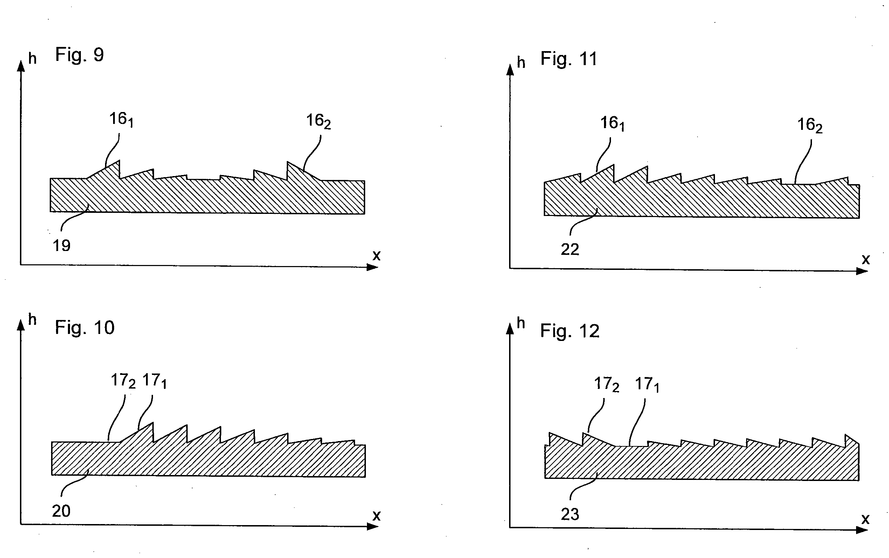

Die gewölbt erscheinenden Darstellungen (die drei kleinen Erhebungen 14 sowie die große Erhebung 15) können für sich jeweils durch eine Höhenfunktion h charakterisiert werden, wobei die Höhe h = h (x, y) üblicherweise von zwei Ortskoordinaten x und y in einer Ebene abhängt. Zur einfacheren Darstellung wird im Folgenden nur die Ortskoordinate x betrachtet, was den in Fig. 3, 5, 7 und 8 gezeigten Schnittansichten entspricht. In Fig. 9 ist schematisch eine Schnittansicht eines Teils der ersten Strukturierung 19 mit den Mikrospiegeln 16 gezeigt. Die lokale Steigung S = dh/dx der ersten Strukturierung 19 wurde so gebildet, dass sie der Steigung der nachgestellten kleinen Erhebungen 14 mit Höhe h(x) entspricht. Gleiches gilt für die zweite Strukturierung 20, von der ein Teil in Fig. 10 gezeigt ist. Auch hier entspricht die lokale Steigung S der Steigung der nachgestellten großen Erhebung 15 mit Höhe h(x). Die Steigung S der ersten und zweiten Strukturierung 19 und 20 liegt in dem hier beschriebenen Ausführungsbeispiel stets zwischen -0,5 und 0,5. Die Aufteilung der Reflexionsrichtungen kann nun beispielsweise dadurch realisiert werden, dass für die erste Ansicht und somit für die erste Strukturierung 19 eine Steigung S1 gemäß S1 = 0,25 + S/2 und für die zweite Ansicht und somit für die zweite Strukturierung 20 eine Steigung S2 gemäß S2 = -0,25 + S/2 festgelegt werden. Die daraus resultierende geänderte erste Strukturierung 22 (für die kleinen Erhebungen 14) ist in Fig. 11 dargestellt.

So weist der Mikrospiegel $16_1$ weiterhin eine Steigung von 0,5 auf, wohingegen der Mikrospiegel $16_2$ statt -0,5 nun eine Steigung von 0 aufweist. Die entsprechende geänderte zweite Strukturierung 23 für die große Erhebung 15 ist in Fig. 12 dargestellt. Hier wird die Steigung des Mikrospiegels $17_1$ von 0,5 in 0 und die Steigung des Mikrospiegels $17_2$ von 0 in -0,25 geändert.

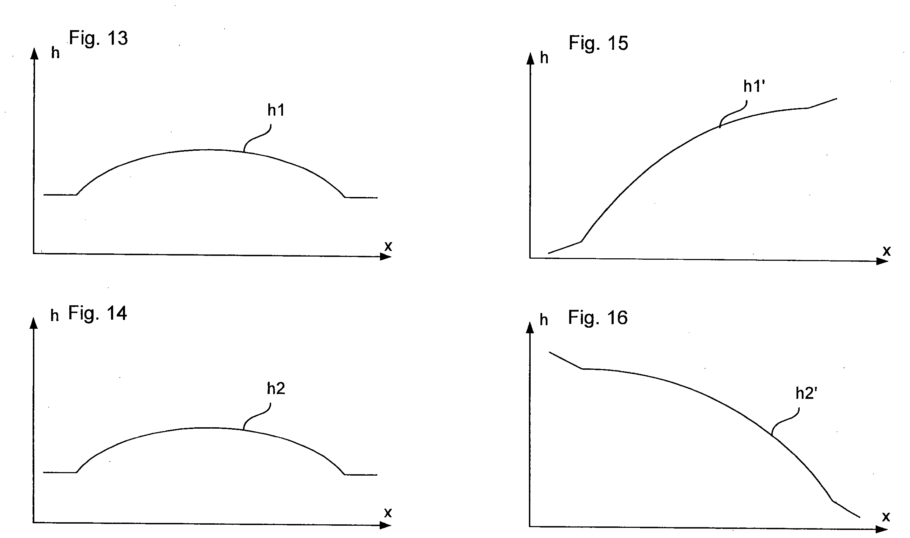

Die Steigung S1 liegt somit immer zwischen 0 und 0,5, was bei senkrechtem Lichteinfall zu einem ersten Winkelbereich $\alpha$1 von 0° bis etwa +53° (bei Drehrichtung gegen den Uhrzeigersinn) führt und die Steigung S2 liegt somit immer zwischen -0,5 und 0, was bei senkrechtem Lichteinfall zu einem zweiten Winkelbereich $\alpha$2 von 0° bis etwa -53° führt. Das entspricht eigentlich der Nachstellung veränderter Höhenprofile h1' bzw. h2', die in Fig. 15 und 16 gezeigt sind. Ein Vergleich mit den in Fig. 13 und 14 gezeigten ursprünglichen Höhenprofilen h1 und h2 zeigt, dass nun das geänderte erste Höhenprofil h1' monoton in x-Richtung ansteigt, während das geänderte zweite Höhenprofil h2' in x-Richtung monoton abfällt. In Fig. 13 ist zur Vereinfachung der Darstellung und für eine bessere Vergleichbarkeit nur das Höhenprofil einer einzelnen Erhebung dargestellt. Die zugehörigen Mikrospiegel 16 und 17 reflektieren somit z.B. senkrecht von oben einfallendes Licht L1, wie in Fig. 2 und 3 dargestellt ist, in unterschiedliche Raumwinkelbereiche $\alpha$1 und $\alpha$2. Die Mikrospiegel 16 reflektieren das Licht immer in den linken Raumwinkelbereich $\alpha$1, während die Mikrospiegel 17 das Licht immer in den rechten Raumwinkelbereich $\alpha$2 reflektieren.

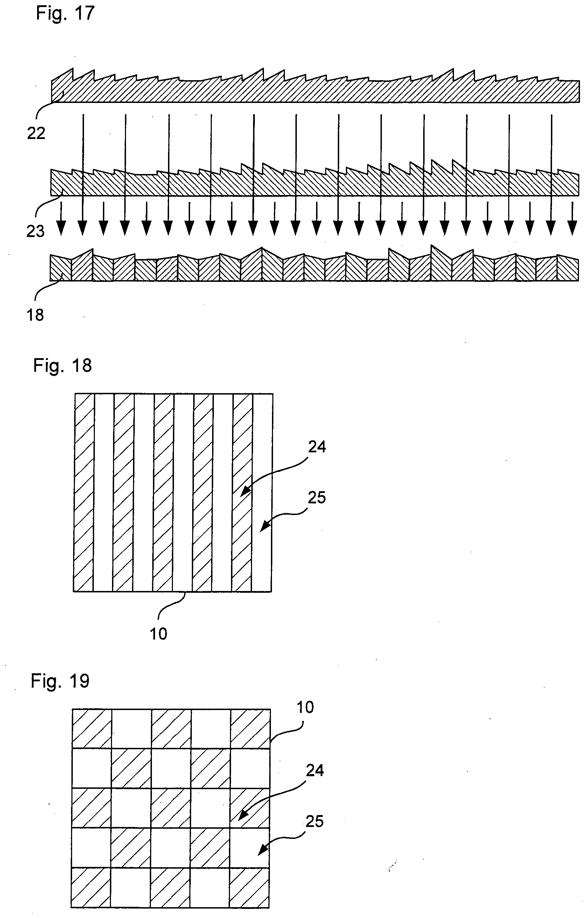

Wenn nun die Mikrospiegel der geänderten Strukturierungen 22 und 23, wie in Fig. 17 angedeutet ist, miteinander verschachtelt werden, um zu der strukturierten Lackschicht 18 zu gelangen (die bereits in Fig. 3 dargestellt ist), tritt ein sehr überraschender Effekt auf. Der Betrachter sieht nun aus den meisten Betrachtungssituationen nicht mehr eine Überlagerung zweier verschiedener Höhenprofile bzw. gewölbt erscheinender Darstellungen, sondern betrachtungswinkelabhängig meist nur eine der beiden gewölbt erscheinenden Darstellungen bzw. Ansichten.

Die Erklärung liegt darin, dass der Betrachter jeweils nur die Darstellung bzw. Ansicht wahrnimmt, die den größten Teil des Umgebungslichtes reflektiert und somit deutlich heller erscheint. Die jeweils andere Darstellung wird davon oft so stark überstrahlt, dass ein Betrachter sie kaum oder gar nicht mehr wahrnimmt. Nimmt man an, dass die Mikrospiegel 16 und 17 senkrecht von oben beleuchtet werden, wie in Fig. 3 gezeigt ist, so sieht ein Betrachter bei Betrachtung von links ausschließlich die Facetten bzw. Mikrospiegel aufleuchten, die das einfallende Licht L1 auch nach links reflektieren, was im beschriebenen Ausführungsbeispiel nur für die Facetten bzw. Mikrospiegel 16 mit Steigungen S1 der Fall ist. Umgekehrt sieht der Betrachter bei Betrachtung von rechts nur Facetten bzw. Mikrospiegel mit Steigungen S2 hell aufleuchten, während alle Facetten mit Steigung S1 von dieser Seite dunkel sind. Von links betrachtet ergibt sich einem Betrachter also das Höhenprofil h1' und somit die gewölbt erscheinenden kleinen Erhebungen 14, während der Betrachter von rechts das Höhenprofil h2' und somit die große Erhebung 15 sieht. Der Betrachter sieht somit von links und rechts unterschiedliche Darstellungen, die jeweils gewölbt erscheinen.

Überraschend ist, dass in der Praxis praktisch nicht auffällt, dass das Höhenprofil h1' hier in x-Richtung ansteigt, während das Höhenprofil h2' in dieser Richtung abfällt. Die menschliche Wahrnehmung ist offenbar darauf abgestimmt, Steigungsänderungen entsprechend einer Krümmung bzw. Wölbung zu erkennen, während die absolute Steigung nur schwer erkannt wird. Für den Betrachter scheinen die gewölbten Ansichten daher das Höhenprofil h1 bzw. h2 aufzuweisen.

Es sei angemerkt, dass der gleiche Effekt wie bei Betrachtungen aus unterschiedlichen Positionen auch durch Kippen des erfindungsgemäßen Flächenmusters 10 erzielt werden kann. Es lässt sich daher auch sagen, dass das optisch variable Flächenmuster 10 ein Kippbild mit Wölbeffekt bereitstellt. Ein Kippen des Flächenmusters 10 ist in der Praxis auch der weitaus üblichere Fall. Ein Betrachter kippt ein erfindungsgemäßes Flächenmuster 10 um eine vorgegebene Achse und beobachtet, wie eine gewölbt erscheinende erste Darstellung in eine unter Umständen völlig verschiedene zweite Darstellung übergeht, die ebenfalls wieder gewölbt erscheint. Der erfindungsgemäß realisierte Effekt ist für einen Betrachter in mehrfacher Hinsicht verblüffend und daher besonders einprägsam. Bereits die im Stand der Technik bekannten Nachstellung einer makroskopischen Wölbung mit mikroskopisch kleinen Facetten verblüfft, insbesondere wenn ein Betrachter die vom Auge vermutete Wölbung dann auf einer dünnen Folie ohne spürbare Erhebungen und Vertiefungen mit den Fingern gegen die Erwartung nicht ertasten kann. Dass eine solche Darstellung dann beispielsweise durch Kippen in eine andere, ebenfalls gewölbt erscheinende Darstellung wechselt, ist ebenfalls entgegen der üblichen Erwartung. Dieser Kippeffekt erhöht zudem gegenüber dem Stand der Technik auch die Sicherheit vor Fälschungen oder Imitationen, da er mit drucktechnischen Mitteln nicht zu imitieren ist.

Die Höhenprofile der einzelnen Darstellungen sind vorteilhaft wesentlich komplexer als die hier dargestellten einfachen Erhebungen 14 und 15. Die erste Darstellung kann beispielsweise eine gewölbt erscheinende Wertzahl zeigen, während die zweite Darstellung z.B. ein Symbol oder ein Wappen zeigen kann. Weiterhin ist es möglich, dass eine oder beide Darstellungen auch ein gewölbt erscheinendes Porträt, Landkarten, Schriftzüge und/oder sonstige gewölbt erscheinende Darstellungen zeigen. Porträts sind besonders vorteilhaft, da sie einerseits sehr komplexe Darstellungen zeigen und somit äußerst schwer nachzustellen sind, während sie andererseits vom menschlichen Betrachter aber sehr leicht erkannt und verifiziert werden können.

Der hier für die Höhenfunktion h = h(x) dargestellte Sachverhalt kann vom Fachmann leicht auf den allgemeinen Fall h = h(x, y) übertragen werden.

Die gewölbt erscheinenden Ansichten werden vorteilhaft über eine optisch wirksame Reliefstruktur realisiert, die in einem Prägelack 18 abgeformt und bevorzugt mit einer reflektierenden oder reflexionserhöhenden Beschichtung versehen werden kann. Vorteilhaft sind insbesondere auch farbkippende Beschichtungen, z.B. Dünnfilm-Interferenzbeschichtungen mit Absorber/ Dielektrikum/ Reflektor, oder Beschichtungen mit cholesterischen Flüssigkristallen. Die Ausbildung der optisch wechselnden Reliefstruktur mit reflektierenden Facetten wurde bereits in Verbindung mit Fig. 1 bis 17 beschrieben. Dabei wurde davon ausgegangen, dass stets abwechselnd ein Mikrospiegel 16 und 17 der ineinander verschachtelten Strukturierungen 22, 23 angeordnet ist. Es ist jedoch auch möglich, statt des einzelnen Mikrospiegels 16, 17 mehrere Mikrospiegel mit insbesondere gleicher Steigung vorzusehen, um eine reflektierende Facette zu realisieren. So können die reflektierenden Facetten wie in der WO 2011/066990 A2 realisiert sein. Vorteilhafte Abmessungen von Facettenstrukturen liegen zwischen 2 $\mu$m und 300 $\mu$m, bevorzugt zwischen 3 $\mu$m und 100 $\mu$m und besonders bevorzugt etwa zwischen 6 $\mu$m und 20 $\mu$m.

Es ist jedoch auch möglich, dass die optisch wirksamen Reliefstrukturen durch solche Strukturen, die auch als Fresnelstrukturen bezeichnet werden können, realisiert werden, wie sie in der EP 1 562 758 B1 beschrieben sind.

Die Fresnelstrukturen weisen vorteilhaft eine Höhe von unter 300 $\mu$m auf. Besonders vorteilhaft sind sehr geringe Höhen von weniger als 10 $\mu$m oder sogar weniger als 5 $\mu$m.

Vorteilhaft sind weiterhin insbesondere asymmetrische Reliefstrukturen, beispielsweise mit regelmäßigen oder unregelmäßigen Sägezahnprofilen. Aber auch mit symmetrischen Strukturen wie beugenden Hologrammgittern ist der erfindungsgemäße Effekt (wenn auch mit Einschränkungen) realisierbar. Die optische Wirkung der Reliefstrukturen kann je nach Ausführung im Wesentlichen strahlenoptischer oder beugungsoptischer Natur sein.

Der erfindungsgemäße optische Effekt kann statt Reliefstrukturen beispielsweise auch in einem Volumenhologramm realisiert sein, wobei ein erfindungsgemäßes Flächenmuster 10 mit optisch wirksamer Reliefstruktur 18 als Master zur Belichtung dienen kann.

Die unterschiedlichen Raumwinkelbereiche $\alpha$1, $\alpha$2, aus denen die zumindest zwei verschiedenen, gewölbt erscheinenden Darstellungen sichtbar sind, können sich überlappen, sich berühren oder voneinander beabstandet sein.

Wenn sie sich überlappen, sind aus einem Winkelbereich die erste, aus einem anderen Winkelbereich die zweite und aus einem dritten Winkelbereich beide Darstellungen sichtbar. Wenn sie sich berühren, dann sind beide Darstellungen praktisch nur aus unterschiedlichen Richtungen sichtbar, wobei die Ausdehnung der Lichtquelle dazu führen kann, dass in bestimmten Winkelbereichen auch beide Darstellungen gleichzeitig sichtbar sind. Wenn sie voneinander beabstandet sind, lässt sich der Raumwinkelbereich minimieren, in dem beide Darstellungen gleichzeitig sichtbar sind. Beispielsweise kann die Steigung im oben genannten Beispiel für h1 den Bereich zwischen -1,2 und - 0,2 und für h2 zwischen 0,2 und 1,2 liegen.

Die Raumwinkelbereiche bzw. die Bereiche der Steigungen der unterschiedlichen Darstellungen müssen nicht symmetrisch sein. So können z.B. die Steigungen für das Höhenprofil h1 zwischen -0,2 und 0,2 und für da Höhenprofil h2 zwischen 0,5 und 0,9 liegen. Eine asymmetrische Anordnung kann insbesondere dann vorteilhaft sein, wenn die Lichtquelle sich unter den üblichen Betrachtungssituationen nicht im Spiegelreflex des Substrates befindet. In weiterführenden Ausführungen mit mehr als zwei unterschiedlichen Darstellungen können die Raumwinkelbereiche so gewählt sein, dass der Betrachter das erfindungsgemäße Flächenmuster nur um eine oder um zwei Achsen drehen muss, um die unterschiedlichen Darstellungen sehen zu können.

Die gewölbt erscheinenden Darstellungen im hier vorliegenden Sinne imitieren somit eine Wölbung durch Nachstellung des Reflexionsverhaltens einer gewölbten Fläche. Sie enthalten somit praktisch nur Informationen über die lokale Steigung der nachgestellten Oberfläche und keine absolute Tiefeninformation, wie sie z.B. bei einem Stereogramm vorliegt. Die gewölbt erscheinende Darstellung zeichnet sich insbesondere dadurch aus, dass Lichtreflexe beispielsweise beim Kippen des erfindungsgemäßen Flächenmusters 10 wie auf einem metallischen Relief umherwandern. Eine solche Darstellung ähnelt somit einer makroskopischen Prägung, wie man sie beispielsweise von Münzen her kennt. Im Stand der Technik bekannte Kippbilder, beispielsweise entsprechende Prägehologramme mit betrachtungswinkelabhängigen unterschiedlichen Motiven, zeigen diese Eigenschaften nicht. Auch die im Stand der Technik bekannten stereographischen Darstellungen mit 3D-Effekt können zwar gewölbte Objekte zeigen, weisen jedoch nicht die Eigenschaft auf, dass Lichtreflexe auf den dargestellten Objekten wie auf einer metallischen Prägung wandern. Stereographische Darstellungen oder Kippbilder, bei denen der Eindruck einer Wölbung lediglich durch statische Schattierungen oder Ähnlichem erzeugt wird, so wie auch ein guter Maler seinen Bildern durch geschickte Farbwahl eine gewisse Plastizität verleihen kann, sind keine gewölbt erscheinenden Darstellungen im hier verstandenen Sinne.

Der Raumwinkelbereich, in dem eine der zumindest zwei unterschiedlichen Darstellungen sichtbar ist, bestimmt auch den zugehörigen Bereich von Steigungen S, die nachgestellt werden können, um das Reflexionsverhalten einer gewölbten Oberfläche zu imitieren. Je größer der Betrachtungswinkelbereich, desto größere Steigungsunterschiede können nachgestellt werden und desto ausgeprägter und kontrastreicher erscheint die Wölbung. Daher ist es zwar prinzipiell möglich, auch mehr als nur zwei gewölbt erscheinende Darstellungen ineinander zu verschachteln, allerdings steht mit steigender Anzahl unterschiedlicher Darstellungen für jede einzelne Darstellung dann ein immer kleinerer Raumwinkelbereich zur Verfügung, so dass die Darstellungen flacher und kontrastärmer werden. Für einen wirksamen Wölbeffekt werden daher Steigungsunterschiede bevorzugt, die einem Winkelbereich der Reflexionsrichtungen von mindestens 10°, bevorzugt mindestens 20° und besonders bevorzugt über 30° entsprechen.

In speziellen Ausführungsvarianten kann bei dem erfindungsgemäßen optisch variablen Flächenmuster 10 vorteilhaft eine Kombination mit einem bekannten unveränderlichen Wölbeffekt vorgesehen werden. So können sich insbesondere auch nur einzelne Elemente einer gewölbt erscheinenden Darstellung betrachtungswinkelabhängig ändern. Beispielsweise könnte sich auf einer gewölbt erscheinenden Uhr ein gewölbt erscheinender Zeiger betrachtungswinkelabhängig in eine andere Position drehen oder eine gewölbt erscheinende Person z.B. beim Kippen die Hand heben oder den Kopf drehen.

In speziellen Ausführungen kann es vorteilhaft sein, den zu einer der gewölbt erscheinenden Ansichten gehörenden Betrachtungswinkelbereich in unterschiedlichen Richtungen unterschiedlich aufzuweiten. Sind beispielsweise zwei gewölbte Darstellungen durch Höhenfunktionen $h_A(x, y)$ und $h_B(x, y)$ gegeben und wird angenommen, dass die zugehörigen Steigungen $S_{Ax}$, $S_{Ay}$, $S_{Bx}$ und $S_{By}$ in x- bzw. y-Richtung ursprünglich zwischen -0,5 und +0,5 lagen, so können beispielsweise analog zu obigem Vorgehen die Betrachtungswinkelbereiche entsprechend folgender Transformation der Steigungen in y-Richtung getrennt und gleichzeitig die Steigungen in x-Richtung unverändert gelassen werden:

$$S2_{Ay} = 0{,}25 + S_{Ay}/2$$

$$S2_{Ax} = S_{Ax}$$

$$S2_{By} = -0{,}25 + S_{By}/2$$

$$S2_{Bx} = S_{Bx}.$$

Die Darstellungen werden somit in y-Richtung etwas flacher, nutzen in x-Richtung aber weiterhin den vorgegebenen Bereich der Steigungen voll aus und erscheinen somit kontrastreicher als wenn die Steigungen in x-Richtung ebenfalls um einen Faktor 2 herunterskaliert würden. Eigentlich ergibt sich damit eine Verzerrung der nachgestellten Höhenprofile, die überraschenderweise vom Betrachter aber nicht wahrgenommen wird.

Erweitert man dieses Beispiel auf nicht nur zwei sondern sehr viele Ansichten, so erhalten die einzelnen Ansichten immer weniger Steigungsunterschiede in y-Richtung und letztlich fast nur noch Steigungen in x-Richtung. Auch diese werden vom Betrachter aber weiterhin gewölbt wahrgenommen und es hat sich gezeigt, dass sich sogar kinematische Effekte realisieren lassen, die weiterhin den Eindruck einer Wölbung aufweisen.

Die Verschachtelung der zumindest zwei Darstellungen kann weitgehend beliebig erfolgen. Die Fläche eines erfindungsgemäßen Flächenmusters kann beispielsweise in einzelne Streifen (Fig. 18) oder Pixel (Fig. 19) aufgeteilt werden, die einfallendes Licht abwechselnd gemäß der nachgestellten Wölbung der zugehörigen Darstellung reflektieren. Bei den in Fig. 18 und 19 in Draufsicht gezeigten Verschachtelungen können die schraffiert dargestellten Streifen bzw. Quadrate die Mikrospiegel 16 und die nicht schraffiert dargestellten Streifen bzw. Quadrate die Mikrospiegel 17 aufweisen. Die schraffierten Streifen bzw. Quadrate bilden zusammen einen ersten Flächenbereich 24 und die nicht schraffierten Streifen bzw. Quadrate bilden zusammen einen zweiten Flächenbereich 25.

Vorteilhaft ist die Verschachtelung so gewählt, dass sie mit dem unbewaffneten Auge nicht auflösbar ist. Die Ausdehnung der zugehörigen Abschnitte (z.B. Streifen, Quadrate, etc.) der Flächenbereiche 24, 25 sollte dazu zumindest in einer Richtung möglichst klein sein, beispielsweise kleiner als 100 μm oder sogar kleiner als 50 μm. Die Streifen oder Pixel können alle gleich groß sein oder unterschiedliche Größen haben. Die Pixel können regelmäßig angeordnet sein (beispielsweise hexagonale, rechteckige oder insbesondere quadratische Pixel auf regelmäßigem Raster) oder auch unregelmäßig angeordnet sein und gleiche oder unterschiedliche Formen aufweisen. Die Flächenanteile der einzelnen Darstellungen können alle gleich oder unterschiedlich sein. Bei unterschiedlicher Aufteilung kann eine der Darstellungen beispielsweise heller und kontrastreicher als andere erscheinen.

Das erfindungsgemäße optisch variable Flächenmuster 10 kann insbesondere in Form von folienbasierten Sicherheitselementen für Banknoten vorgesehen werden. Dabei sind Ausführungen als Sicherheitsstreifen, -patch oder insbesondere auch als Fensterfaden 12 (Figur 1) möglich.

Das erfindungsgemäße optisch variable Flächenmuster 10 kann vorteilhaft mit anderen Sicherheitsmerkmalen kombiniert sein, wie z.B. fluoreszierende Farben, Cleartext, z. B. erzeugt durch eine nur partiell vorhandene reflektierende oder zumindest reflexionserhöhende Beschichtung, Magnet-, Polarisationseffekte, andere optisch variable Sicherheitsmerkmale wie beispielsweise Hologramme, etc.

Bezugszeichenliste

10　optisch variables Flächenmuster
11　Banknote
12　Fensterfaden
13　rechteckiger Flächenbereich
14　kleine Erhebung
15　große Erhebung
16　Mikrospiegel
17　Mikrospiegel
18　Lackschicht
19　erste Strukturierung
20　zweite Strukturierung
21　dritte Strukturierung
22　geänderte erste Strukturierung
23　geänderte zweite Strukturierung
24　erster Flächenbereich
25　zweiter Flächenbereich
L1　einfallendes Licht
L2　reflektiertes Licht der ersten Ansicht
L3　reflektiertes Licht der zweiten Ansicht
α1　erster Raumwinkelbereich
α2　zweiter Raumwinkelbereich
h1　Höhenprofil
h2　Höhenprofil
h1'　Höhenprofil
h2'　Höhenprofil

Patentansprüche

1. Optisch variables Flächenmuster (10) mit

einem Träger (18), der einen ersten und einen zweiten Flächenbereich (24, 25) aufweist, wobei die beiden Flächenbereiche (24, 25) so ausgebildet sind, dass der erste Flächenbereich (24) in einem ersten Raumwinkelbereich (α1) eine gewölbt erscheinende erste Ansicht (14) und der zweite Flächenbereich (25) in einem zweiten Raumwinkelbereich (α2), der verschieden zum ersten Raumwinkelbereich (α1) ist, eine gewölbt erscheinende zweite Ansicht (15) darbietet, wobei zumindest einer der beiden Flächenbereiche (24, 25) die gewölbt erscheinende Ansicht (14, 15) durch Imitation das Reflexionsverhalten einer gewölbten Oberfläche darbietet, und wobei die Imitation des Reflexionsverhaltens der gewölbten Oberfläche durch optisch wirksame Reliefstrukturen (16, 17) bewirkt ist, wobei die Flächenbereiche ineinander verschachtelt sind.

2. Optisch variables Flächenmuster nach Anspruch 1, bei dem die beiden Flächenbereiche als reflektierende Flächenbereiche ausgebildet sind.

3. Optisch variables Flächenmuster nach Anspruch 1 oder 2, bei dem die optisch wirksamen Reliefstrukturen in einer Lackschicht ausgebildet sind.

4. Optisch variables Flächenmuster nach einem der Ansprüche 1 bis 3, bei dem die optisch wirksamen Reliefstrukturen mit einer reflektierenden oder zumindest reflexionserhöhenden Beschichtung versehen sind.

5. Optisch variables Flächenmuster nach einem der Ansprüche 1 bis 4, bei dem die optisch wirksamen Reliefstrukturen Mikrospiegel aufweisen, insbesondere, bei dem die Mikrospiegel Abmessungen zwischen 2 $\mu$m und 300 $\mu$m, bevorzugt zwischen 3 $\mu$m und 100 $\mu$m und besonders bevorzugt etwa zwischen 6 $\mu$m und 20 $\mu$m aufweisen.

6. Optisch variables Flächenmuster nach einem der Ansprüche 1 bis 5, bei dem die optisch wirksamen Reliefstrukturen beugungsoptisch wirkende Beugungsstrukturen aufweisen.

7. Optisch variables Flächenmuster nach einem der Ansprüche 1 bis 6, bei dem die Reliefstrukturen für jede Ansicht jeweils lokale Steigungsänderungen der entsprechenden darzubietenden Ansicht nachstellen, wobei insbesondere die durch die Reliefstrukturen nachgestellten lokalen Steigungsänderungen so gewählt sind, dass einfallendes paralleles Licht in den entsprechenden Raumwinkelbereich reflektiert wird.

8. Optisch variables Flächenmuster nach einem der obigen Ansprüche, bei dem sich die beiden Raumwinkelbereiche nicht überlappen.

9. Optisch variables Flächenmuster nach einem der obigen Ansprüche, bei dem der erste und/oder zweite Flächenbereich einfallendes paralleles Licht in einen Winkelbereich von mindestens 10°, bevorzugt mindestens 20° und besonders bevorzugt mindestens 30° reflektieren/ reflektiert.

10. Sicherheitselement mit einem optisch variablen Flächenmuster nach einem der Ansprüche 1 bis 9.

11. Wertdokument mit einem optisch variablen Flächenmuster nach einem der Ansprüche 1 bis 9.

12. Verfahren zur Erzeugung eines optisch variablen Flächenmusters (10) nach einem der Ansprüche 1 bis 9, bei dem

- die Steigungsverläufe der darzubietenden Ansichten (14, 15) ermittelt werden,
- der Steigungsverlauf der ersten Ansicht (14) und der Steigungsverlauf der zweiten Ansicht (15) über unterschiedliche Transformationen geändert werden und
- der Träger (18) mit den beiden Flächenbereichen (24, 25) basierend auf den geänderten Steigungsverläufen hergestellt wird.

**Claims**

1. Optically variable surface pattern (10) having a carrier (18) comprising a first and a second surface region (24, 25), wherein the two surface regions (24, 25) take such a form that in a first solid angle range ($\alpha$1) the first surface region (24) presents a first view (14) that appears curved and in a second solid angle range ($\alpha$2), which differs from the first solid angle range ($\alpha$1), the second surface region (25) presents a second view (15) that appears curved, wherein at least one of the two surface regions (24, 25) presents the view (14, 15) that appears curved by imitating the reflection behaviour of a curved surface, and wherein the imitation of the reflection behaviour of the curved surface is effected by optically effective relief structures (16, 17), wherein the surface regions are nested.

2. Optically variable surface pattern according to Claim 1, wherein the two surface regions take the form of reflective surface regions.

3. Optically variable surface pattern according to Claim 1 or 2, wherein the optically effective relief structures take the form of a lacquer layer.

4. Optically variable surface pattern according to any of Claims 1 to 3, wherein the optically effective relief structures are provided with a reflective or at least reflection-enhancing coating.

5. Optically variable surface pattern according to any of Claims 1 to 4, wherein the optically effective relief structures comprise micromirrors, in particular wherein the micromirrors have dimensions between 2 $\mu$m and 300 $\mu$m, preferably between 3 $\mu$m and 100 $\mu$m and particularly preferably for instance between 6 $\mu$m and 20 $\mu$m.

6. Optically variable surface pattern according to any of Claims 1 to 5, wherein the optically effective relief structures have diffraction structures with a diffraction-optical effect.

7. Optically variable surface pattern according to any of Claims 1 to 6, wherein for each view, the relief structures in each case simulate local slope changes of the corresponding view to be presented, wherein in particular the local slope changes simulated by the relief structures are chosen such that incident parallel light is reflected into the corresponding solid angle range.

8. Optically variable surface pattern according to any of the preceding claims, wherein the two solid angle ranges do not overlap.

9. Optically variable surface pattern according to any of the preceding claims, wherein the first and/or second surface region reflect/reflects incident parallel light into an angular range of at least 10°, preferably at least 20° and particularly preferably at least 30°.

10. Security element having an optically variable surface pattern according to any of Claims 1 to 9.

11. Valuable document having an optically variable surface pattern according to any of Claims 1 to 9.

12. Method for producing an optically variable surface pattern (10) according to any of Claims 1 to 9, wherein

- the slope profiles of the views (14, 15) to be presented are ascertained,
- the slope profile of the first view (14) and the slope profile of the second view (15) are modified by way of different transformations, and
- the carrier (18) having the two surface regions (24, 25) is manufactured on the basis of the modified slope profiles.

**Revendications**

1. Motif surfacique optiquement variable (10) comprenant

un substrat (18) qui possède une première et une deuxième zone de surface (24, 25), dans lequel les deux zones de surface (24, 25) sont configurées de telle manière que la première zone de surface (24) présente un premier aspect (14) d'apparence bombée à l'intérieur d'une première plage d'angle solide ($\alpha$1) et que la seconde zone de surface (25) présente un second aspect (15) d'apparence bombée à l'intérieur d'une seconde plage d'angle solide ($\alpha$2) différente de la première plage d'angle solide ($\alpha$1), au moins l'une des deux zones de surface (24, 25) présentant l'aspect (14, 15) d'apparence bombée par imitation du comportement de réflexion d'une surface bombée, et dans lequel l'imitation du comportement de réflexion de la surface bombée est réalisée par des structures en relief (16, 17) à effet optique, dans lequel les zones de surface sont imbriquées les unes dans les autres.

2. Motif surfacique optiquement variable selon la revendication 1, dans lequel les deux zones de surface sont configurées sous forme de zones de surface réfléchissantes.

3. Motif surfacique optiquement variable selon la revendication 1 ou 2, dans lequel les structures en relief à effet optique sont réalisées dans une couche de laque.

4. Motif surfacique optiquement variable selon l'une quelconque des revendications 1 à 3, dans lequel les structures en relief à effet optique sont dotées d'un revêtement réfléchissant ou tout au moins augmentant la réflexion.

5. Motif surfacique optiquement variable selon l'une quelconque des revendications 1 à 4, dans lequel les structures en relief à effet optique possèdent des micro-miroirs, en particulier dans lequel les micro-miroirs ont des dimensions comprises entre 2 $\mu$m et 300 $\mu$m, de préférence entre 3 $\mu$m et 100 $\mu$m et de manière particulièrement préférée entre environ 6 $\mu$m et 20 pm.

6. Motif surfacique optiquement variable selon l'une quelconque des revendications 1 à 5, dans lequel les structures en relief à effet optique possèdent des structures de diffraction à effet de diffraction optique.

7. Motif surfacique optiquement variable selon l'une quelconque des revendications 1 à 6, dans lequel les structures en relief reproduisent respectivement pour chaque aspect des variations locales de pente de l'aspect correspondant à présenter, les variations locales de pente reproduites par les structures en relief étant en particulier choisies de telle manière qu'une lumière parallèle incidente soit réfléchie dans la plage d'angle solide correspondante.

8. Motif surfacique optiquement variable selon l'une quelconque des revendications précédentes, dans lequel les deux zones d'angle solide ne se chevauchent pas.

9. Motif surfacique optiquement variable selon l'une quelconque des revendications précédentes, dans lequel la première et/ou la deuxième zone surfacique réfléchit/réfléchissent une lumière parallèle incidente dans une plage angulaire d'au moins 10°, de préférence d'au moins 20° et de manière particulièrement préférée d'au moins 30°.

10. Élément de sécurité doté d'un motif surfacique optiquement variable selon l'une quelconque des revendications 1 à 9.

11. Document de valeur doté d'un motif surfacique optiquement variable selon l'une quelconque des revendications 1 à 9.

12. Procédé de génération d'un motif surfacique optiquement variable (10) selon l'une quelconque des revendications 1 à 9, dans lequel

- les courbes de pente des aspects (14, 15) à présenter sont déterminées,
- la courbe de pente du premier aspect (14) et la courbe de pente du deuxième aspect (15) sont modifiées par des transformations différentes, et
- le substrat (18) possédant les deux zones de surface (24, 25) est fabriqué sur la base des courbes de pente modifiées.

Fig. 1

Fig. 2

Fig. 3

Fig. 4

14    14    14

Fig. 5

16 16 16

19

Fig. 6

15

Fig. 7

17 17 17 17

20

Fig. 8

19

20

21

Fig. 9

Fig. 11

Fig. 10

Fig. 12

EP 2 909 660 B1

Fig. 15

h1'

Fig. 16

h2'

Fig. 13

h1

Fig. 14

h2

15

Fig. 17

22

23

18

Fig. 18

24

25

10

Fig. 19

10

24

25

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1562758 B1
- WO 2011066990 A2
- DE 102010025775 A1
- DE 102010048262 A1